# FASCICULE DE BREVET EUROPEEN

(11) **EP 0 738 465 B1**
(45) Date de publication et mention de la délivrance du brevet: **08.03.2000**
(21) Numéro de dépôt: 96400823.9
(22) Date de dépôt: 18.04.1996
(51) Int. Cl.: A01G 9/02, B28D 1/00, E04H 13/00

(54) **Procédé de fabrication d'un conteneur en pierre noble**
Verfahren zur Herstellung eines Behälters aus Naturstein
Process for making a container out of natural stone

(30) Priorité: 19.04.1995 FR 9504628
(43) Date de publication de la demande: 23.10.1996
(73) Titulaire: SARL MARBRERIE JOSEPH SANSONE, F-59420 MOUVAUX (FR)
(72) Inventeur: Sansone, Damien Dominique, 59420 Mouvaux (FR); Sansone, Joseph Antoine, 59420 Mouvaux (FR)
(74) Mandataire: Vander-Heym, Serge

(56) Documents cités:
- DE-C- 400 370
- DE-U- 9 016 411
- FR-A- 413 216
- FR-A- 2 391 340

## Description

La présente invention est relative à un procédé de fabrication d'un conteneur en pierre noble. Selon le préambule de la revendication 1. Par l'expression pierre noble, on désigne des minéraux tels que le marbre ou le granit par exemple.

Le procédé de l'invention est plus particulièrement destiné à la réalisation de jardinières ou d'urnes funéraires.

En l'état actuel de la technique, lorsqu'on désire réaliser une jardinière, par exemple, on part d'un bloc prismatique, tel qu'un bloc de marbre, qui est creusé. Ce procédé de fabrication est très coûteux car toute la partie centrale qui est enlevée est perdue.

Une autre technique, décrite par exemple dans DE-U-9 016 411, consiste à découper la partie centrale du bloc en ne laissant subsister que l'entourage latéral qui constitue l'ébauche de la jardinière. La partie centrale enlevée forme un bloc prismatique qui peut être utilisé pour réaliser une jardinière présentant des dimensions plus réduites. De cette façon une notable économie est réalisée.

Pour achever la jardinière, il faut lui adjoindre un fond qui est constitué par une plaque dont les dimensions sont égales à celles de l'ébauche vue de dessus. Ce fond est fixé sous l'ébauche par tous moyens connus.

Comme les champs du fond sont visibles, il est nécessaire de les meuler soigneusement, ce qui implique qu'on doive découper le fond selon des dimensions qui sont supérieures à celles finales, d'où une perte de matière. A cet inconvénient s'ajoute celui résultant des opérations de meulage qui augmente le prix de revient.

Malgré tout le soin apporté à la réalisation du fond et à sa fixation, l'expérience a montré que le joint entre ledit fond et la partie inférieure de l'ébauche était toujours visible et disgracieux.

La plupart des jardinières et analogues, réalisés selon les procédés connus, présente des faces latérales parfaitement lisses ce qui pose des problèmes quant à leur manutention lorsque le style de la jardinière ne permet pas de prévoir des poignées latérales.

Le procédé de l'invention, qui remédie à ces inconvénients, consiste, dans un premier temps, à réaliser une ébauche de la façon connue qui se présente sous la forme d'un tube, dans un deuxième temps , à réaliser une rainure à une extrémité de l'ébauche tubulaire et, dans un troisième temps, à fixer une plaque de fond dans ladite rainure, l'épaisseur de ladite plaque étant au plus égale à la profondeur de ladite rainure.

La présente invention sera mieux comprise par la description qui va suivre faite en se référant au dessin annexé à titre d'exemple indicatif, seulement, sur lequel :

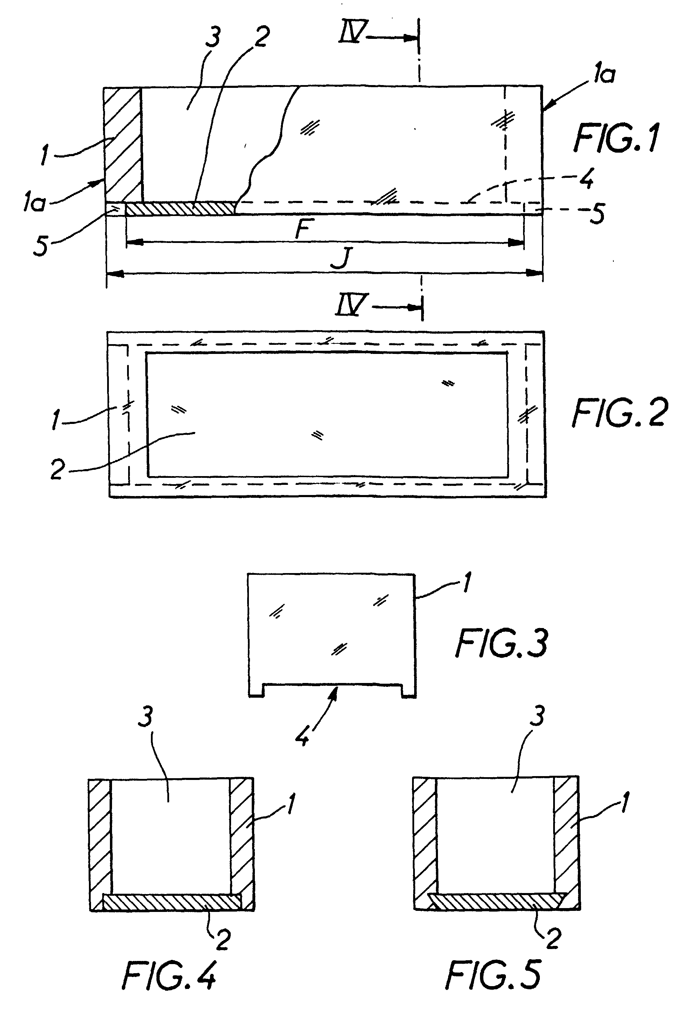

- la figure 1 est une vue en élévation, avec arrachement partiel, d'une jardinière réalisée selon le procédé de l'invention;
- la figure 2 est la vue de dessus de la figure 1;
- la figure 3 est la vue de côté de la figure 1, le fond étant enlevé;
- la figure 4 est une vue en coupe effectuée selon la ligne IV-IV de la figure 1
- la figure 5 est une vue analogue à celle 4 montrant une variante de réalisation.

En se reportant au dessin et selon un mode de réalisation, on voit que le conteneur, tel qu'une jardinière, présente deux parties 1 et 2.

La partie 1, ou ébauche, est obtenue en évidant, selon un procédé connu, la partie centrale 3, d'un bloc de marbre ou analogue, de façon à ce que ladite ébauche se présente sous la forme d'une enveloppe tubulaire.

Selon l'invention, on réalise sur la partie inférieure de l'ébauche 1 une rainure 4, longitudinale, débouchant sur les faces latérales 1a. Ces faces sont celles qui ne sont pas exposées aux regards lors d'une utilisation normale de la jardinière.

La partie 2, qui forme le fond de la jardinière, est constituée par une plaque rectangulaire découpée de façon à s'ajuster dans la rainure 4.

L'épaisseur du fond 2 est au plus égale à la profondeur de la rainure 4.

Il ressort des explications, ci-dessus, que le fond 2 est complètement dissimulé par l'ébauche. De ce fait, il n'est pas nécessaire de meuler les champs dudit fond qui peuvent être bruts de découpage.

Le fond 2 est fixé dans la rainure 4 par tous moyens usuels (ciment, colle etc.).

Selon une caractéristique de l'invention, la longueur **F** du fond est inférieure à celle **J** de la jardinière. De cette façon, on réserve latéralement deux encoches 5 permettant de saisir la jardinière et de la déplacer.

La figure 5 montre une variante selon laquelle la rainure 4 affecte une section en queue d'aronde.

Bien entendu, la présente invention ne se limite pas aux modes de réalisations décrits et représentés mais s'étend à toutes variantes de formes et dimensions.

C'est ainsi que la rainure 4 peut affecter, en section, une forme trapézoïdale, le fond 2, présentant une section analogue.

## Revendications

1. Procédé de fabrication d'un conteneur en pierre noble du genre de ceux réalisés à partir d'une ébauche (1) se présentant sous la forme d'un tube, caractérisé en ce que l'ébauche comporte à une extrémité une rainure (4) dans laquelle on engage le fond (2).

2. Procédé selon la revendication 1, caractérisé en ce que l'épaisseur du fond (2) est, au plus, égale à la profondeur de la rainure (4).

3. Procédé selon l'une quelconque des revendications 1 et 2, caractérisé en ce que la rainure (4) débouche sur les faces latérales de l'ébauche.

4. Procédé selon l'une quelconque des revendications 1 à 3, caractérisé en ce que la longueur (**F**) du fond (2) est inférieure à celle (**J**) de l'ébauche.

## Patentansprüche

1. Herstellungsverfahren eines Behälters aus Edelstein der Art, die aus einem Rohwerk (1) realisiert werden, das sich in der Form einer Röhre darstellt, dadurch gekennzeichnet, daß dieses Rohwerk an einem Ende eine Rille (4) umfaßt, in die man den Boden (2) eingreifen läßt.

2. Verfahren gemäß Anspruch 1, dadurch gekennzeichnet, daß die Stärke des Bodens (2) höchstens mit der Tiefe der Rille (4) gleich ist.

3. Verfahren gemäß Anspruch 1 und 2, dadurch gekennzeichnet, daß die Rille (4) in die lateralen Seiten des Rohwerkes einmündet.

4. Verfahren gemäß Anspruch 1 bis 3, dadurch gekennzeichnet, daß die Länge (F) des Bodens (2) geringer ist als die (J) des Rohwerkes.

## Claims

1. Method for producing a rich stone container of the type of those embodied from a blank (1) appearing in the form of a tube, characterised in that the blank comprises at one end a groove (4) in which the bottom (2) is engaged.

2. Method according to claim 1, characterised in that the thickness of the bottom (2) is equal at the most to the depth of the groove (4).

3. Method according to claim 1 or 2, characterised in that the groove (4) opens onto the side faces of the blank.

4. Method according to one of claims 1 to 3, characterised in that the length (F) of the bottom (2) is smaller than that (J) of the blank.
